# EUROPEAN PATENT SPECIFICATION

(11) **EP 4 372 889 B1**
(45) Date of publication and mention of the grant of the patent: **18.02.2026**
(21) Application number: 23816394.3
(22) Date of filing: 01.06.2023
(51) Int. Cl.: H01M 10/613, H01M 10/625, H01M 50/204, H01M 50/209, H01M 50/289, H01M 50/24, H01M 50/244, H01M 50/367, H01M 50/358

(54) **BATTERY PACK**
BATTERIEPACK
BLOC-BATTERIE

(30) Priority: 03.06.2022 KR 20220068280
(43) Date of publication of application: 22.05.2024
(73) Proprietor: LG Energy Solution, Ltd., Seoul 07335 (KR)
(72) Inventor: YANG, Chang Hyeon, Daejeon 34122 (KR); JEON, Bo Ra, Daejeon 34122 (KR); KIM, Dae Gil, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2023/007552
(87) International publication number: WO 2023/234734

(56) References cited:
- EP-A1- 3 916 894
- EP-A1- 3 926 735
- EP-A1- 4 216 357
- CN-A- 111 668 408
- CN-A- 114 497 854
- CN-U- 210 454 481
- KR-A- 20220 031 530
- KR-B1- 102 269 290
- US-A1- 2022 118 841

## Description

### [Technical Field]

The present invention relates to a battery pack. More particularly, the battery pack of the present invention is characterized in that it contains a plurality of cell stacks each of which containing one or more battery cells and is capable of releasing high temperature gases generated internally to the exterior by using a supplementary wall that separates each cell stack and includes a gas flow path therein.

This application claims the benefit of priority to Korean Patent Application No. 10-2022-0068280, filed on June 3, 2022.

### [Background Art]

Types of secondary batteries include lithium-ion cells, lithium polymer cells, nickelcadmium cells, nickel-hydrogen cells, nickel-zinc cells, etc. These unit secondary battery cells, i.e. unit battery cells, have an operating voltage of about 2.5 V to 4.2 V. Therefore, if a higher output voltage is required, a plurality of battery cells may be connected in series to form a battery pack. In addition, depending on the charge and discharge capacity required for the battery pack, a plurality of battery cells may be connected in parallel to form a battery pack. Thus, the number of battery cells included in the battery pack may be varied depending on the required output voltage or charge/discharge capacity.

For example, when forming a battery pack by connecting a plurality of battery cells in series/parallel, it is common to first form a cell stack of the plurality of battery cells, and then add other components to form a battery pack using the cell stack.

Cell stack refers to a component with a plurality of secondary batteries connected in series or parallel, and battery pack refers to a component with a plurality of cell stacks connected in series or parallel to increase capacity, power output, etc.

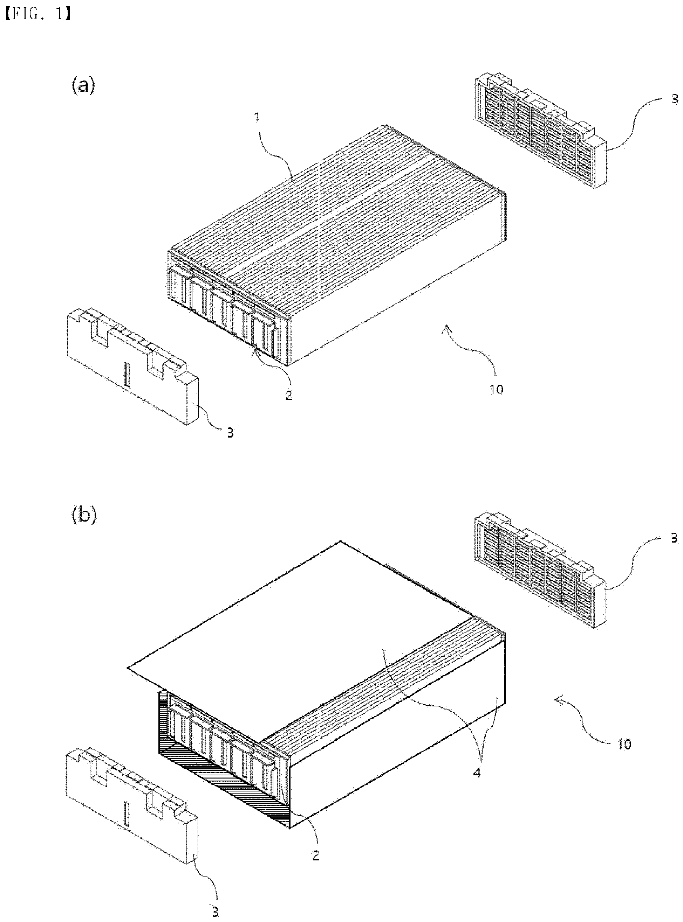

FIG. 1(a) is an exploded perspective view of a typical cell stack mounted in a battery pack. Referring to FIG. 1(a), a busbar frame and end plates are coupled to the front and rear of the cell stack, respectively, formed by stacking a plurality of battery cells. The cell stack may also be enclosed and protected by a U-shaped module frame or the like, as shown in FIG. 1(b).

On the other hand, it is important for the battery pack to release the high temperature gases generated by each cell stack effectively. If the high temperature gases generated during the charging and discharging process are not effectively released, heat accumulation will occur, which will accelerate the degradation of the cell stack, and in some cases, ignition or explosion may occur. In addition, the heat of the gases can be transferred to other normally operating cell stacks, resulting in the degradation or explosion of the entire battery cells contained within the battery pack.

### [Related-Art Document]

Korean Patent Application Publication No. 10-2022-0014027;
Chinese Patent Application Publication No. CN 111 668 408 A
Korean Patent Application Publication No. 10-2022-0031530 A;
European Patent Application Publication No. 3 926 735 A1;
European Patent Application Publication No. 4 216 357 is a prior art according to Art. 54(3) EPC

### [Disclosure]

### [Technical Problem]

The present invention is directed to solving the above mentioned problems, and aims to provide a battery pack capable of rapidly venting high temperature gases to the outside when degradation occurs in a cell stack of any one of the plurality of cell stacks, to prevent the battery pack from igniting or exploding.

Further, it is an object of the present invention to provide a battery pack capable of preventing the transfer of heat of the high temperature gas to other neighboring cell stacks when degradation occurs in any of the cell stacks of the plurality of cell stacks, to prevent thermal runaway occurs.

Other objects and advantages of the present invention will be understood from the following description, and will become apparent from the example embodiments of the present invention. Furthermore, it will be readily apparent that the objects and advantages of the present invention may be realized by the methods and combinations thereof disclosed in the claims of the patent.

### [Technical Solution]

According to the present invention, a battery pack according to claim 1 is provided.

The first partition member is penetrated at the rear end to open a space between the pair of ribs in a rearward direction of the first partition member.

The supplementary wall includes a gas flow path closed on its upper and lower surfaces by the pair of ribs, and closed on both sides by the first partition member and the second partition member, the gas flow path being open to the outside through the first hole and the opening, respectively.

The supplementary wall may be arranged to be separately spaced along the longitudinal direction of the main wall on both sides of the main wall.

The pair of ribs may be separately spaced up and down by a predetermined distance.

The second partition member may be coupled with the first partition member in a direction facing the ribs of the first partition member.

The supplementary wall may include a plurality of the first holes on one side.

The ribs of the second partition member are formed to be located on top of a pair of ribs formed on this first partition member, and the first and second holes may be formed on both sides of the supplementary wall at a lower and upper portion, respectively.

The first partition member and the second partition member may be penetrated at the rear end to open a space between the pair of ribs in a rearward direction of each partition member.

The supplementary wall may be inserted at its rear end into the side wall to allow the upper opening and the lower opening to be in communication with the gas venting path.

The supplementary wall may include a plurality of the first hole and the second hole on each side.

The supplementary wall, including an upper gas flow path located at the top, closed on its upper and lower sides by a pair of ribs formed in the second partition member, and closed on both sides by the first partition member and the second partition member, and a lower gas flow path located at the bottom, closed on its upper and lower sides by a pair of ribs formed in the first partition member and closed on both sides by the first partition member and the second partition member, and the upper gas flow path and the lower gas flow path may not be in communication with each other within the supplementary wall.

### [Advantageous Effects]

According to the present invention, it is possible to prevent the battery pack from igniting or exploding even if degradation or high temperature gases are generated in the cell stack contained in the battery pack.

In addition, according to the present invention, it is possible to prevent thermal runaway caused by transferring high temperature gas generated in a cell stack to a neighboring other cell stack.

Furthermore, according to the present invention, a plurality of a rib shape can be applied to a wall installed within the battery pack and separating each cell stack to improve rigidity while forming a pathway for gas transfer.

### [Brief Description of the Drawings]

FIG. 1 is an exploded perspective view of a conventional cell stack.
FIG. 2 is a perspective view of a pack case of the present invention.
FIG. 3 illustrates the supplementary wall combined with the base plate.
FIG. 4 is a front perspective view of a supplementary wall contained in a battery pack according to a first embodiment.
FIG. 5 is a rear perspective view of the supplementary wall from FIG. 4.
FIG. 6 is an exploded perspective view of the supplementary wall from FIG. 4.
FIG. 7 is a top view of a pack case of a battery pack according to a first embodiment.
FIG. 8 is a diagram illustrating a first partition member of a supplementary wall included in a battery pack according to a second embodiment.
FIG. 9 is a perspective view of a supplementary wall including the first partition member of FIG. 8.
FIG. 10 is a front perspective view of a supplementary wall included in a battery pack according to a third embodiment.
FIG. 11 is a rear perspective view of the supplementary wall from FIG. 10.
FIG. 12 is an exploded perspective view of the supplementary wall of FIG. 10.
FIG. 13 is a side view of a second partition member included in the supplementary wall of FIG. 12.
FIG. 14 is a perspective view of the second partition member of FIG. 13.
FIG. 15 is a side view of a first partition member included in the supplementary wall of FIG. 12.
FIG. 16 is a perspective view of the first partition member of FIG. 15.
FIG. 17 is a perspective view of a pack case included in a battery pack according to a third embodiment.

### [Detailed Description of the Preferred Embodiments]

Hereinafter, the present invention will be described in detail. Prior to this, terms or words used in the present specification and claims should not be restrictively interpreted as ordinary meanings or dictionary-based meanings.

Therefore, the exemplary embodiments described herein and the configurations illustrated in the drawings in present disclosure are just a preferred embodiments of the invention and are not representative of all of the technical ideas of the invention.

The embodiments disclosed herein are provided for more perfect explanation of the present disclosure, and thus the shape, size and the like of components may be exaggerated, omitted or simplified in the drawings for better understanding. Thus, the size and ratio of components in the drawings do not wholly reflect the actual size and ratio.

The present invention relates to a battery pack having a structure capable of separating a space in which a plurality of cell stacks is contained, and at the same time, in the event of high temperature gases being generated in any one of the cell stacks, rapidly releasing the gases to the outside. Here, the cell stack may be in the form of one or more battery cells stacked, as shown in Figure 1(a), or in the form of a battery module enclosed by a module frame around its perimeter, as shown in Figure 1(b).

A battery pack of the present invention includes a pack case (1000) that provides a space in which a cell stack is located.

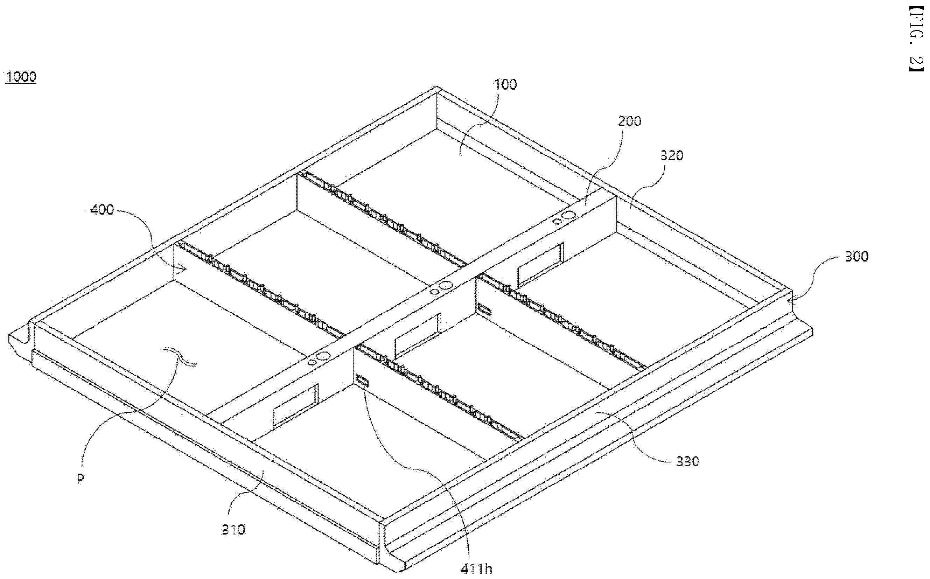

FIG. 2 is a perspective view of the pack case 1000 of the present invention.

The pack case 1000 includes a base plate 100, a main wall 200, side walls 300, and a supplementary wall 400, as shown in the FIG. 2.

In addition to the pack case 1000 above, the battery pack of the present invention may further include a top cover (not shown). The top cover may be combined with the pack case 1000 to form a single housing that contains a plurality of cell stacks.

The base plate 100 is positioned at a lower portion of the battery pack, in a configuration wherein the cell stack is settled, and supports a lower portion of the cell stack.

The main wall 200 is formed to extend across the base plate 100 and is coupled to the center of the base plate 100.

This main wall 200 divides the space inside the pack case 1000 into two main sections so that cell stacks on both sides settle on the base plate 100 symmetrically with respect to each other relative to the main wall 200. In other words, cell stacks located on one side of the main wall 200 and cell stacks located on the other side of the main wall 200 are separated by the main wall 200.

Inside the main wall 200 may be located wires or busbars or the like that are electrically connected to the cell stacks settling on the base plate 100. Here, each cell stack is settled on the base plate 100 with its included end plate facing the main wall 200.

The side wall 300 is coupled along the periphery of the edge of the base plate 100 in a hollow form.

The side wall 300 provides support for the side portions of cell stacks settling on the base plate 100 and provides protection from the outside.

The side wall 300 having the hollow structure includes a gas venting path 331 inside which gas can flow.

The side wall 300 includes a front frame 310, a rear frame 320, and a pair of side frames 330, as shown in FIG. 2.

The front frame 310 and rear frame 320 support one side of the outermost cell stack, and the side frame 330 supports the rear of the settled cell stack.

The gas venting path 331 is preferably included in the side frame 330. In addition, a gas venting 331 may also be formed in a portion of the front frame 310 or the rear frame 320 to be in communication with the gas venting path 331 of the side frame 330.

The side wall 300 may further include a gas outlet 321 through which a gas venting path 331 formed in the side wall 300 is open to the outside.

The supplementary wall 400 is coupled to the base plate 100 to repartition the containing space P partitioned by the main wall 200.

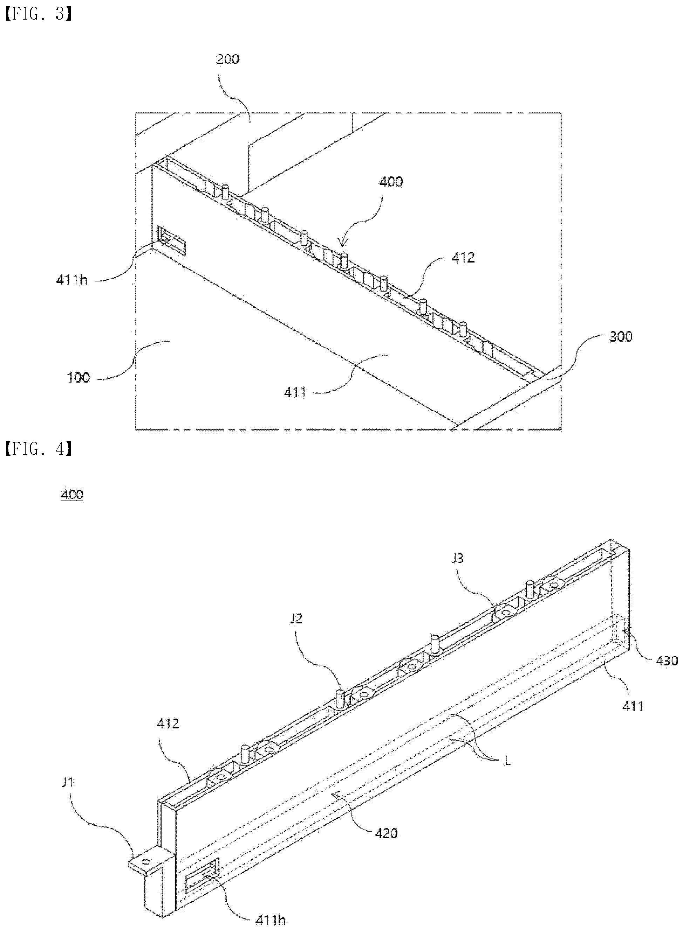

FIG. 3 illustrates a supplementary wall 400 coupled to the base plate 100.

The supplementary wall 400 formed by the coupling of the first partition member 411 and the second partition member 412 is coupled at both ends to the main wall 200 and the side wall 300, respectively, as shown in FIG. 3.

The supplementary walls 400 are arranged to be spaced apart at regular intervals along the longitudinal direction of the main wall 200 on both sides of the main wall 200, as shown in FIG. 2. Here, the cell stack is contained in a containing space P partitioned by the main wall 200, and a pair of neighboring supplementary walls 400, respectively.

The supplementary wall 400 of the present invention is characterized in that it has the form of a pair of partition members coupled together, and includes a gas flow path 420 formed due to a ribbed structure (L) formed on the coupling surface of the partition members, and a hole penetrated to allow the gas flow path 420 to be in communication with the containing space (P).

The battery pack of the present invention, the supplementary wall 400 can be categorized into several embodiments based on the rib structure and the hole structure.

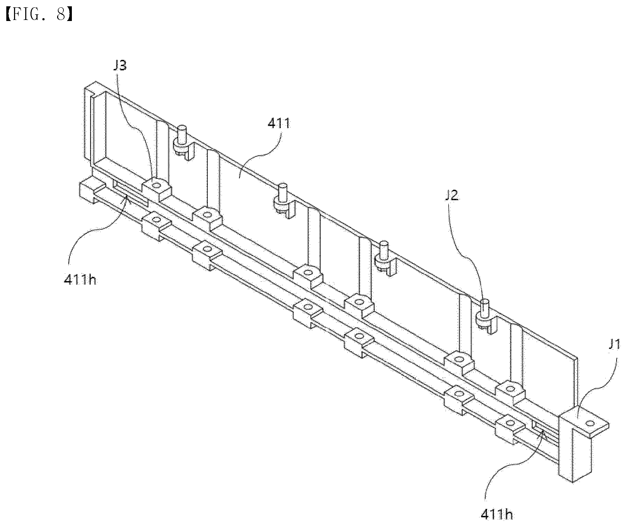

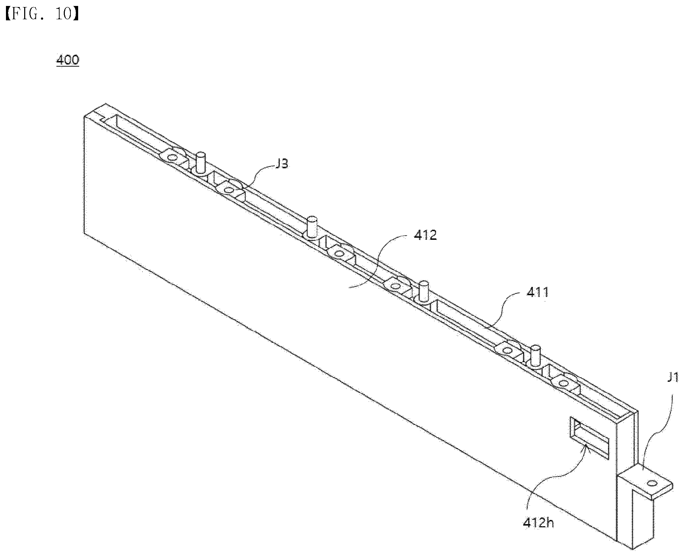

FIG. 4 to FIG. 7 relate to a supplementary wall 400 included in a battery pack according to a first embodiment, FIG. 8 to FIG. 9 relate to a supplementary wall 400 included in a battery pack according to a second embodiment, and FIG. 10 to FIG. 17 relate to a supplementary wall 400 included in a battery pack according to a third embodiment.

Hereinafter, each embodiment will be described with reference to the accompanying drawings.

### [Modes of Invention]

### [First embodiment]

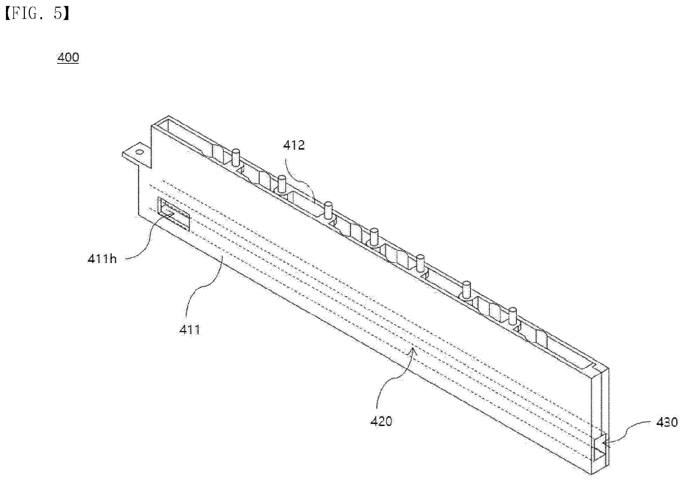

FIG. 4 is a front perspective view of a supplementary wall 400 included in a battery pack according to a first embodiment, and FIG. 5 is a rear perspective view of the supplementary wall 400 of FIG. 4.

The supplementary wall (400) includes a main joint (J1) projecting forwardly at its front end, and is engaged with the main wall (200) in such a way that the main joint (J1) is inserted into the main wall (200). Here, the supplementary wall 400 may be secured to the main wall 200 in such a way that the inserted main joints J1 and the main wall 200 are screwed together.

The supplementary wall (400) includes a main joint (J1) projecting forwardly at its front end, and is engaged with the main wall (200) in such a way that the main joint (J1) is inserted into the main wall (200). Here, the supplementary wall 400 may be secured to the main wall 200 by a screwed connection between the inserted main joint J1 and the main wall 200.

The supplementary wall 400 has a hollow structure on the inside. Specifically, the supplementary wall 400 includes a gas flow path 420 formed to extend along a longitudinal direction to allow gas to flow therein, and an opening 430 formed at a rear end to allow the gas flow path 420 to open to the outside. Furthermore, it also includes a first hole 411h formed at one side to allow the gas flow path 420 to open to the outside.

The supplementary wall 400 is inserted and joined to the main wall 200 by a front end in which the main joint J1 is formed, and by a rear end inserted and joined to the side wall 300 so that the opening 430 is in communication with the gas venting path 331 of the side wall 300. In this case, the first hole 411h is in communication with the gas flow path 420 by at least one containing space P formed by the supplementary wall 400. Thus, the containing space P is in communication with the gas venting path 331 of the side wall 300 via the gas flow path 420.

A front end of the two ends of the gas flow path 420 is closed by a configuration of the main joint J1 or the like, as shown in FIG. 4, and a rear end is opened by an opening 430.

On an upper side of the supplementary wall 400, a top joint J2 may be formed that is engageable with an upper cover that is engaged with the pack case 1000 to cover the cell stack contained in the pack case 1000.

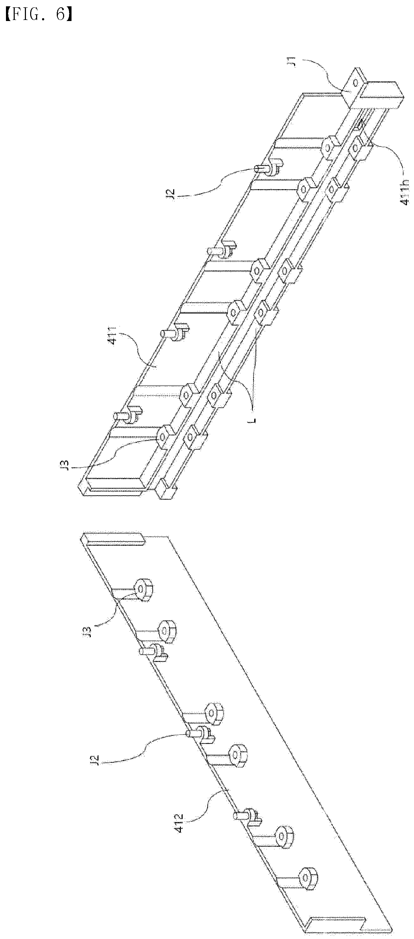

FIG. 6 is an exploded perspective view of the supplementary wall 400 of FIG. 4.

The supplementary wall 400 includes a first partition member 411 and a second partition member 412 that engages the first partition member 411, as shown in FIG. 6.

The first partition member 411 may include a vertically perforated wall joint J3 for screw connection to an inner surface that is coupled to the second partition member 412, as shown in FIG. 6. More specifically, the wall joint J3 included in the first partition member 411 is preferably formed on each of the ribs L as shown in FIG. 6.

The second partition member 412 may also include a wall joint J3 vertically perforated for screw connection on the inner side where it is coupled with the first partition member 411. Here, the wall joint J3 included in the first partition member 411 and the second partition member 412 are preferably formed in positions corresponding to each other up and down. Therefore, when the first partition member 411 and the second partition member 412 are engaged against each other, the wall joint J3 formed on each of the partition members are overlapped in a position corresponding to each other in the vertical direction, and the first partition member 411 and the second partition member 412 are engaged by a bolt or the like penetrating the wall joint J3 formed on each of the partition members. In this case, a bolt through each of the wall joints J3 may also penetrate the base plate 100 of the pack case 1000 to engage and secure the supplementary wall 400 with the base plate 100. Here, the bolts penetrate the ribs L of the first partition member 411 in a vertical direction to engage the supplementary wall 400.

The first partition member 411 includes a pair of ribs L formed extending along the longitudinal direction of the supplementary wall 400.

The pair of ribs L is configured to be spaced apart by a predetermined distance up and down, and the first partition member 411 including the ribs L is coupled with the second partition member 412 so that the space between the ribs L forms the gas flow path 420. In other words, a passage-shaped gas flow path 420 is formed by covering the space between the ribs L by the second partition member 412.

In other words, the supplementary wall 400 of the present invention includes a gas flow path 420 that is closed on its upper and lower sides by the pair of ribs L, and is closed on both sides by the first partition member 411 and the second partition member 412.

The gas flow path 420 is closed on the upper and lower sides by the pair of ribs L, and closed on both sides by the first partition member 411 and the second partition member 412.

The first partition member 411 is penetrated at the rear by extending into the space between the pair of ribs L to open in the rearward direction of the first partition member 411, and it is preferable that the second partition member 412 has a structure with an open rear corresponding to the penetrated area of the first partition member 411 to prevent blockage of the penetrated area of the first partition member 411 when combined with the first partition member 411 as shown in FIG. 5.

The penetrated area forms an opening 430 of the supplementary wall 400 by engagement of the first partition member 411 and the second partition member 412.

Further, at least one of the first partition member (411) or the second partition member (412) coupled with the first partition member (411) includes a first hole (411h) that penetrates between the ribs (L) included in the first partition member (411).

Therefore, the gas flow path 420 formed by the coupling of the first partition member 411 and the second partition member 412 can be opened to the outside through the opening 430 and the first hole 411h.

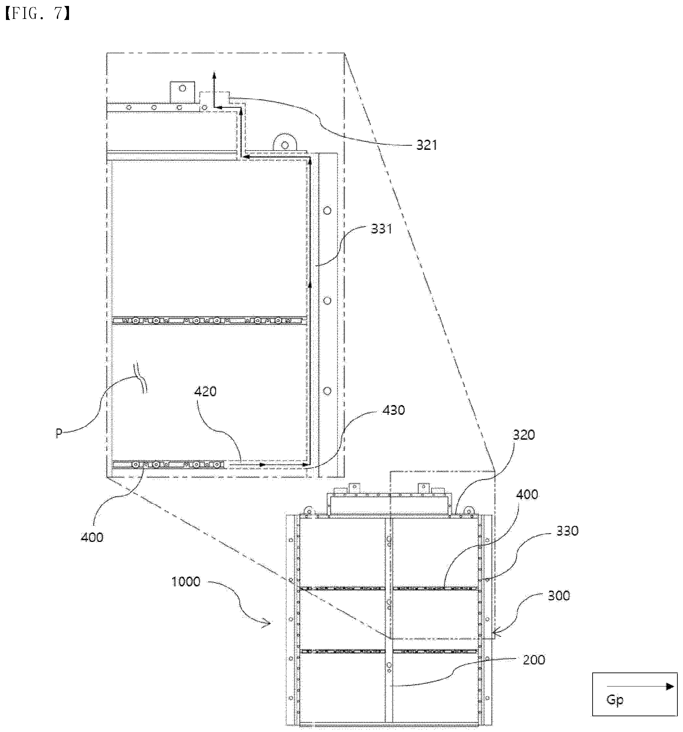

FIG. 7 is a top view of a pack case 1000 of a battery pack according to a first embodiment.

Referring to the partially enlarged view of FIG. 7 and the gas flow path, the gas flow path 420 formed in the supplementary wall 400, and the gas Gp flowing through the gas venting path 331 of the side wall 300 coupled with the supplementary wall 400, that is, the side frame 330, is discharged to the outside through the gas outlet 321 of the rear frame 320 coupled with the side frame 330.

The battery pack according to the first embodiment of the present invention can be effectively vented to the outside through the supplementary wall 400, even if high temperature gases are generated in any one of the containing spaces P in which the cell stack is contained, as shown in FIG. 7.

### [Second embodiment]

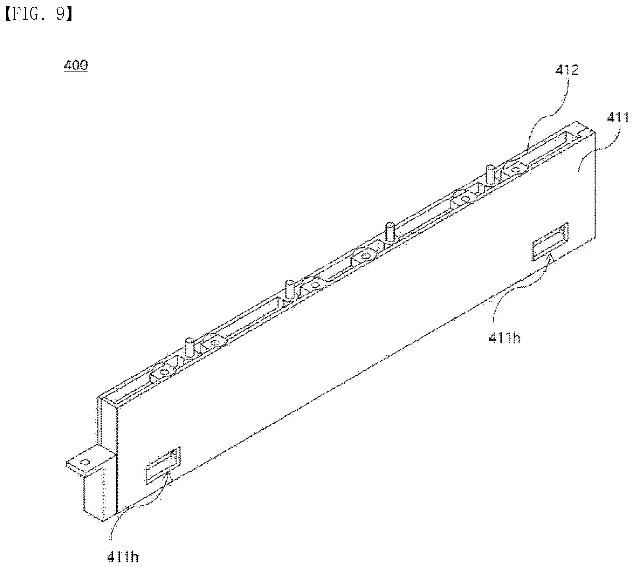

FIG. 8 illustrates a first partition member 411 of a supplementary wall 400 included in a battery pack according to a second embodiment, and FIG. 9 illustrates a perspective view of a supplementary wall 400 including the first partition member 411 of FIG. 8.

The battery pack according to a second embodiment of the present invention is characterized in that a plurality of first holes 411h are formed on one side of the supplementary wall 400.

The supplementary wall 400 included in the battery pack according to the second embodiment of the present invention, as shown in Figures 8 and 9, includes at least two first holes 411h which is formed to penetrate at least one of the first partition member 411 and the second partition member 412 in order to allow the gas flow path 420 to be in communication with the containing space P. The plurality of the first holes 411h are preferably configured adjacent to both ends of the supplementary wall 400, as shown.

If the first holes 411h are formed adjacent to each of the two ends of the supplementary wall 400 as described above, gases generated by the cell stack while being blocked by the main wall 200 and the sidewalls 300 can travel along the outer surface of the main wall 200 and the side walls 300 and effectively enter the first holes 41 1h formed at each end of the supplementary wall 400.

### [Third embodiment]

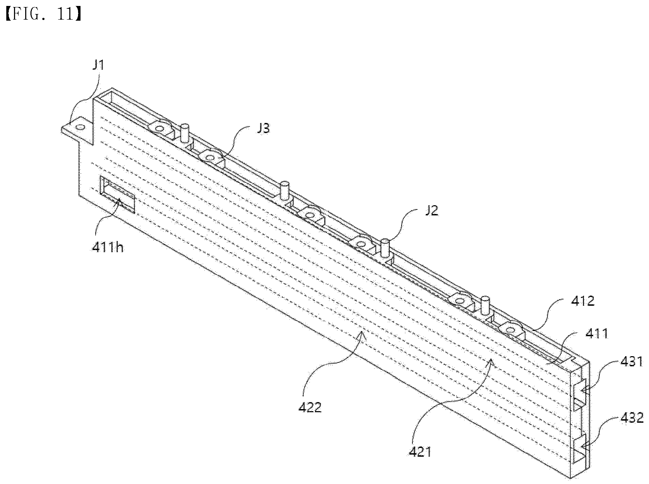

FIG. 10 is a front perspective view of a supplementary wall 400 included in a battery pack according to a third embodiment, and FIG. 11 is a rear perspective view of a supplementary wall 400 included in a battery pack according to a third embodiment.

The supplementary wall 400 includes a main joint J1 projecting forwardly therefrom, as shown in FIG. 10, and is engaged with the main wall 200 in such a way that the main joint J1 is inserted into the main wall 200. Here, the supplementary wall 400 may be fixed to the main wall 200 by means of the inserted main joint J1 and the main wall 200 being screwed together.

In addition, on an upper side of the supplementary wall 400, a top joint J2 may be formed that is engageable with an upper cover that is engaged with the pack case 1000 to cover the cell stack contained in the pack case 1000.

The battery pack according to a third embodiment of the present invention is characterized in that both the first partition member 411 and the second partition member 412 have a ribbed (L) configuration.

More specifically, a battery pack according to the present invention includes a supplementary wall (400) including a first partition member (411) including a pair of ribs (L) extending along a longitudinal direction on one side, and a second partition member (412) coupled to the first partition member (411) and including a pair of ribs (L) extending along a longitudinal direction on one side.

In other words, the first partition member 411 and the second partition member 412 of the supplementary wall 400 included in the battery pack according to the third embodiment each include a pair of ribs L on opposing inner sides.

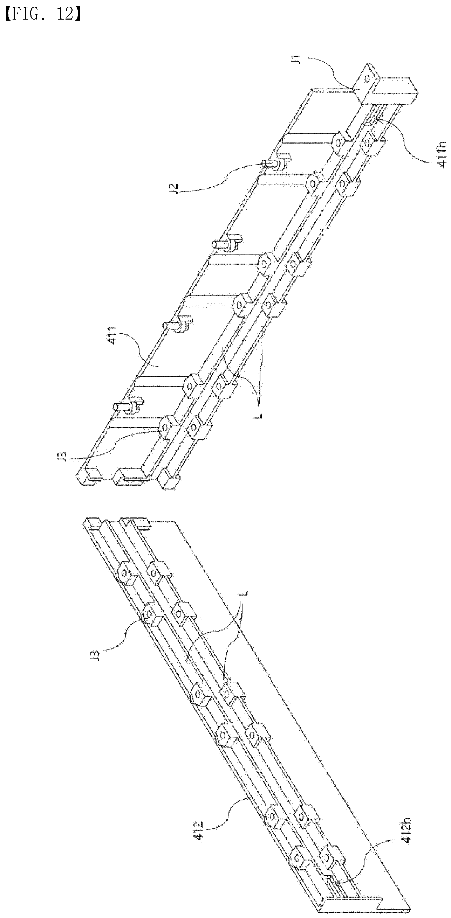

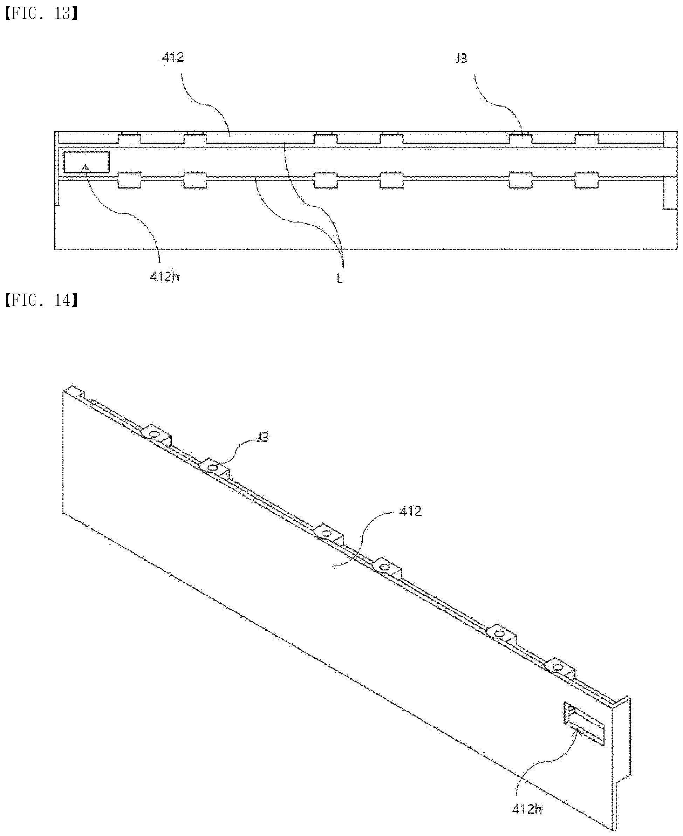

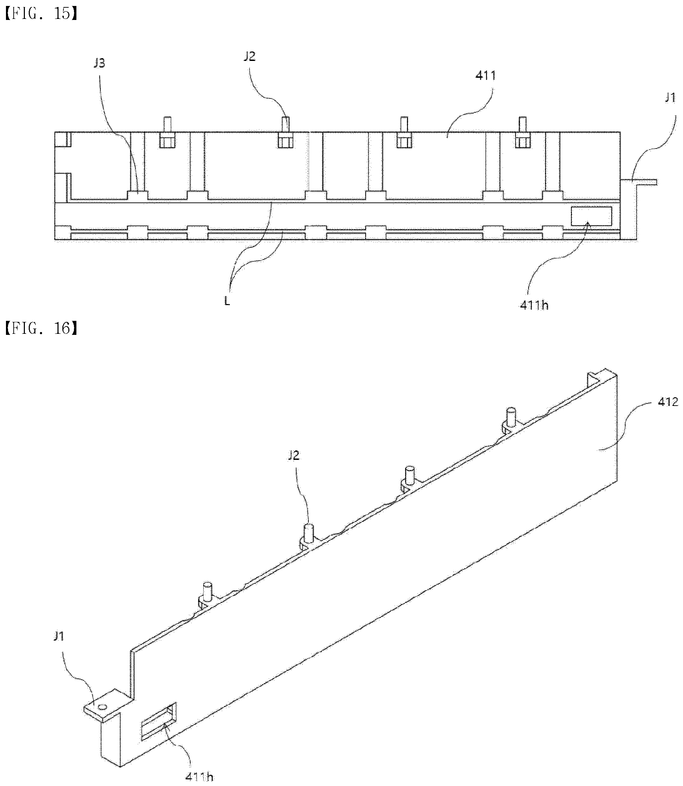

FIG. 12 is an exploded perspective view of a supplementary wall 400 included in a battery pack according to a third embodiment, FIG. 13 is a side view of a second partition member 412 included in the supplementary wall 400 of FIG. 12, FIG. 14 is a perspective view of the second partition member 412 of FIG. 13, FIG. 15 is a side view of a first partition member 411 included in the supplementary wall 400 of FIG. 12, and FIG. 16 is a perspective view of the first partition member 411 of FIG. 15.

According to FIG. 12 above, the first partition member 411 and the second partition member 412 each include a pair of ribs L.

As shown in FIG. 12, the ribs L of the second partition member 412 are located at the top in order to not overlap the ribs L of the first partition member 411, and the ribs L of the first partition member 411 are located at the bottom in order to not overlap the ribs L of the second partition member 412.

The space between the pair of ribs L formed at the top in the second partition member 412 forms the upper gas flow path 421 by the engagement of the first partition member 411 and the second partition member 412. Furthermore, the space between the pair of ribs L formed at the bottom in the first partition member 411 forms a lower gas flow path 422 by the combination of the second partition member 412 and the first partition member 411. Here, the upper gas flow path 421 and the lower gas flow path 422 are separated and isolated with each other and are designed to be not in communication with each other. Therefore, the ribs L located below the pair of ribs L formed on the second partition member 412 and the ribs L located above the pair of ribs L formed on the first partition member 411 are preferably spaced apart by a predetermined distance.

Thus, the upper gas flow path 421 of the supplementary wall 400 included in the battery pack according to the above third embodiment is formed by being closed on its upper surface by a pair of ribs L formed in the second partition member 412, and closed on both sides by the first partition member 411 and the second partition member 412. Further, the lower gas flow path 422 is formed by being closed on its upper surface by a pair of ribs L formed in the first partition member 411, and closed on both sides by the first partition member 411 and the second partition member 412.

The first partition member 411 and the second partition member 412 extend into the space between the pair of ribs L and are penetrated rearward, as shown in FIG. 12, in order that the space between the ribs L is open toward the rear end of each partition member. Thus, the supplementary wall 400 included in the battery pack according to the third embodiment includes an upper opening 431 located at the top and a lower opening 432 located at the bottom, as shown in FIG. 11, wherein the first partition member 411 and the second partition member 412 are engaged.

The upper opening 431 is in communication with the upper gas flow path 421, and the lower opening 432 is in communication with the lower gas flow path 422.

The supplementary wall 400 included in the battery pack according to a third embodiment of the present invention is inserted at its rear end into the side wall 300 to allow the upper opening 431 and the lower opening 432 to be in communication with the gas venting path 331 of the side wall 300.

The second partition member 412 may include a wall joint J3 penetrated in a vertically oriented direction for screw connection to an inner surface that engages the first partition member 411, as shown in FIGS. 12 to 14. More specifically, the wall joint J3 included in the second partition member 412 is formed on each rib L preferably.

The first partition member 411 may also include a vertically perforated wall joint J3 for screw connection to an inner surface that engages the second partition member 412, as shown in FIGS. 12, 15, and 16. More specifically, the wall joint J3 included in the first partition member 411 is preferably formed on each rib L corresponding to the position of the wall joint J3 of the second partition member 412. In other words, the wall joint J3 included in the first partition member 411 and the second partition member 412 are formed in positions corresponding to each other up and down, preferably.

Therefore, if the first partition member 411 and the second partition member 412 are joined against each other, the wall joint J3 formed on each of the partition members are positioned to be consistent with each other in the vertical direction, and the first partition member 411 and the second partition member 412 are joined by a bolt or the like penetrating the wall joint J3 formed on each of the partition members. Here, a bolt penetrating each of the wall joints J3 may also penetrate the base plate 100 of the pack case 1000 to engage and secure the supplementary wall 400 and the base plate 100. Here, the bolts penetrate perpendicularly through the ribs L of the first partition member 411 to engage the supplementary wall 400.

The supplementary wall 400 included in the battery pack according to a third embodiment of the present invention is formed with holes on both sides. Specifically, it includes a first hole 411h penetrated to be in communication with a lower gas flow path 422 on one side and a second hole 412h penetrated to be in communication with an upper gas flow path 421 on the other side.

The first hole 411h is formed by penetrating a lower portion of the first partition member 411 to be in communication with the lower gas path 422, and the second hole 412h is formed by penetrating an upper portion of the second partition member 412 to be in communication with the upper gas path 421.

The supplementary wall 400 may also include a plurality of first holes 411h and second holes 412h on each side, as may the supplementary wall 400 included in the battery pack according to the second embodiment above.

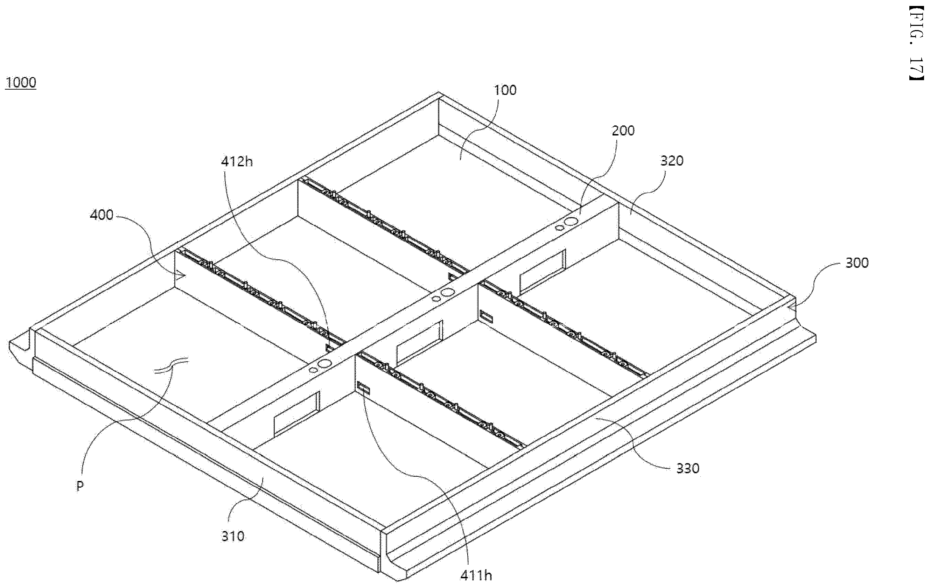

FIG. 17 is a perspective view of a pack case 1000 included in a battery pack according to a third embodiment of the present invention.

Referring to FIG. 17, the first hole 411h and the second hole 412h are formed on both sides of the supplementary wall 400 to be in communication with respective containing spaces P. That is, any one containing space P may be formed by the main wall 200, the side wall 300, and the at least one supplementary wall 400.

The containing space P compartmented by the supplementary wall 400 on both sides may be in communication with both the first hole 411h of one supplementary wall 400 and the second hole 412h of the other supplementary wall 400, and the containing space P compartmented by the sidewall 300 on the other side of the supplementary wall 400 may be in communication with either the first hole 411h or the second hole 412h of the supplementary wall 400.

The present invention has been described in more detail above with reference to the drawings and embodiments. However, it is to be understood that the configurations shown in the drawings or embodiments described herein are only one example embodiment of the invention and do not represent all of the technical ideas of the invention.

### [Description of Reference Numerals]

10: (Prior art) cell stack
1: (Prior art) battery cell
2: (Prior art) busbar frame
3: (Prior art) end plate
4: (Prior art) module frame
1000: pack case
100: base plate
200: main wall
300: side wall
310: front frame
320: rear frame
321: gas outlet
330: side frame
331: gas venting path
400: supplementary wall
411: first partition member
411h: first hole
412: second partition member
412h: second hole
420: gas flow path
421: upper gas flow path
422: lower gas flow path
430: opening
431: upper opening
432: lower opening
L: ribs
P: containing space
J1: main joint
J2: upper joint
J3: wall joint
Gp: gas

## Claims

1. A battery pack accommodating a cell stack including one or more battery cells, comprising:
a pack case (1000) having a space in which the cell stack is placed,
wherein the pack case comprises:
a base plate (100) supporting a lower portion of the cell stack;
a main wall (200) extending across the base plate (100) and coupled to a center portion of the base plate (100);
a side wall (300) having a hollow shape and including a gas venting path (331) therein, and coupled along a periphery of an edge of the base plate (100); and
a plurality of supplementary walls (400) having a front end coupled to the main wall (200), and inserted at a rear end into the side walls (300) to allow the opening to be in communication with the gas venting path (331)
wherein the supplementary wall (400) comprises:
a first partition member (411) including a pair of ribs (L) formed to extend along a longitudinal direction of the supplementary wall on one side, and a second partition member (412) coupled to the first partition member (411),
wherein at least one of the first partition member (411) and the second partition member (412) includes a first hole (411h) between the pair of ribs (L),
wherein the first partition member (411) is penetrated at the rear end to form an opening in a space between the pair of ribs (L) in a rearward direction of the first partition member (411),
wherein the second partition member (412) comprises:
a pair of ribs (L) formed extending along a longitudinal direction on one side to be located on top of a pair of ribs (L) formed on the first partition member (411), and
the supplementary wall (400) comprises a second hole penetrating between the ribs (L) included in the second partition member (412) on the other side opposite to the side in which the first hole is formed
wherein the supplementary wall (400) comprises:
a gas flow path (420) closed on its upper and lower surfaces by the pair of ribs (L), and closed on both sides by the first partition member (411) and the second partition member (412), the gas flow path (420) being open to outside through the first hole and the opening, respectively.

2. The battery pack of claim 1, wherein the supplementary wall (400) is arranged to be separately spaced along the longitudinal direction of the main wall (200) on both sides of the main wall (200).

3. The battery pack of claim 1, wherein the pair of ribs (L) are separately spaced up and down by a predetermined distance.

4. The battery pack of claim 1, wherein the second partition member (412) is coupled with the first partition member (411) in a direction facing the ribs (L) of the first partition member (411).

5. The battery pack of claim 1, wherein the supplementary wall (400) comprises a plurality of the first holes (411h) on one side.

6. The battery pack of claim 1, wherein
the first and second holes are formed on both sides of the supplementary wall at a lower and upper portion, respectively.

7. The battery pack of claim 1, wherein the first partition member (411) and the second partition member (412) are penetrated at the rear end to open a space between the pair of ribs (L) in a rearward direction of each of the first partition member (411) and the second partition member (412).

8. The battery pack of claim 7, wherein the supplementary wall (400) is inserted at its rear end into the side wall to allow an upper opening (431) and a lower opening (432) to be in communication with the gas venting path (331).

9. The battery pack of claim 1, wherein the supplementary wall (400) comprises a plurality of the first hole (411h) and the second hole (412h) on each side.

10. The battery pack of claim 1, wherein the supplementary wall (400) comprises:
an upper gas flow path (421) located at the top, closed on its upper and lower sides by a pair of ribs (L) formed in the second partition member (412), and closed on both sides by the first partition member (411) and the second partition member (412); and
a lower gas flow path (422) located at the bottom, closed on its upper and lower sides by a pair of ribs (L) formed in the first partition member (411) and closed on both sides by the first partition member (411) and the second partition member (412); and
the upper gas flow path (421) and the lower gas flow path (422) are not in communication with each other within the supplementary wall (400).

## Patentansprüche

1. Batteriepack, welcher einen Zellenstapel aufnimmt, welcher eine oder mehrere Batteriezellen umfasst, umfassend:
ein Packgehäuse (1000), welches einen Raum aufweist, in welchem der Zellenstapel platziert ist,
wobei das Packgehäuse umfasst:
eine Basisplatte (100), welche einen unteren Abschnitt des Zellenstapels stützt;
eine Hauptwand (200), welche sich über die Basisplatte (100) erstreckt und mit einem zentralen Abschnitt der Basisplatte (100) gekoppelt ist;
eine Seitenwand (300), welche eine hohle Form aufweist und einen Gasentlüftungsweg (331) darin umfasst und welche entlang einer Umgebung eines Rands der Basisplatte (100) gekoppelt ist; und
eine Mehrzahl von Hilfswänden (400), welche ein vorderes Ende aufweisen, welches mit der Hauptwand (200) gekoppelt ist, und welche an einem hinteren Ende in die Seitenwände (300) eingeführt sind, um es der Öffnung zu ermöglichen, mit dem Gasentlüftungsweg (331) in Verbindung zu sein,
wobei die Hilfswand (400) umfasst:
ein erstes Trennelement (411), welches ein Paar von Rippen (L) umfasst, welche gebildet sind, um sich an einer Seite entlang einer longitudinalen Richtung der Hilfswand zu erstrecken, und ein zweites Trennelement (412), welches mit dem ersten Trennelement (411) gekoppelt ist,
wobei wenigstens eines aus dem ersten Trennelement (411) und dem zweiten Trennelement (412) ein erstes Loch (411h) zwischen dem Paar von Rippen (L) umfasst,
wobei das erste Trennelement (411) an dem hinteren Ende durchdrungen ist, um in einer Rückwärtsrichtung des ersten Trennelements (411) in einem Raum zwischen dem Paar von Rippen (L) eine Öffnung zu bilden,
wobei das zweite Trennelement (412) umfasst:
ein Paar von Rippen (L), welche sich entlang einer longitudinalen Richtung an einer Seite erstreckend gebildet sind, um an einer Oberseite eines Paars von Rippen (L) gebildet zu sein, welche an dem ersten Trennelement (411) gebildet sind, und
wobei die Hilfswand (400) ein zweites Loch umfasst, welches zwischen den Rippen (L), welche in dem zweiten Trennelement (412) umfasst sind, an der anderen Seite entgegengesetzt zu der Seite durchdringt, in welcher das erste Loch gebildet ist,
wobei die Hilfswand (400) umfasst:
einen Gasströmungsweg (420), welcher an seinen oberen und unteren Flächen durch das Paar von Rippen (L) geschlossen ist und welcher an beiden Seiten durch das erste Trennelement (411) und das zweite Trennelement (412) geschlossen ist, wobei der Gasströmungsweg (420) jeweils durch das erste Loch und die Öffnung zu der Außenseite geöffnet ist.

2. Batteriepack nach Anspruch 1, wobei die Hilfswand (400) dazu angeordnet ist, entlang der longitudinalen Richtung der Hauptwand (200) an beiden Seiten der Hauptwand (200) separat beabstandet zu sein.

3. Batteriepack nach Anspruch 1, wobei das Paar von Rippen (L) um einen vorbestimmten Abstand separat nach oben und nach unten beabstandet ist.

4. Batteriepack nach Anspruch 1, wobei das zweite Trennelement (412) mit dem ersten Trennelement (411) in einer Richtung gekoppelt ist, welche den Rippen (L) des ersten Trennelements (411) zugewandt ist.

5. Batteriepack nach Anspruch 1, wobei die Hilfswand (400) an einer Seite eine Mehrzahl der ersten Löcher (411h) umfasst.

6. Batteriepack nach Anspruch 1, wobei
die ersten und zweiten Löcher an beiden Seiten der Hilfswand jeweils an einem unteren und oberen Abschnitt gebildet sind.

7. Batteriepack nach Anspruch 1, wobei das erste Trennelement (411) und das zweite Trennelement (412) an dem hinteren Ende durchdrungen sind, um in einer Rückwärtsrichtung jedes aus dem ersten Trennelement (411) und dem zweiten Trennelement (412) einen Raum zwischen dem Paar von Rippen (L) zu öffnen.

8. Batteriepack nach Anspruch 7, wobei die Hilfswand (400) an ihrem hinteren Ende in die Seitenwand eingeführt ist, um es einer oberen Öffnung (431) und einer unteren Öffnung (432) zu ermöglichen, in Verbindung mit dem Gasentlüftungsweg (331) zu sein.

9. Batteriepack nach Anspruch 1, wobei die Hilfswand (400) an jeder Seite eine Mehrzahl der ersten Löcher (411h) und der zweiten Löcher (412h) umfasst.

10. Batteriepack nach Anspruch 1, wobei die Hilfswand (400) umfasst:
einen oberen Gasströmungsweg (421), welcher an der Oberseite angeordnet ist, welcher an seiner oberen und unteren Seite durch ein Paar von Rippen (L) geschlossen ist, welche in dem zweiten Trennelement (412) gebildet sind, und welcher an beiden Seiten durch das erste Trennelement (411) und das zweite Trennelement (412) geschlossen ist; und
einen unteren Gasströmungsweg (422), welcher an der Unterseite angeordnet ist, welcher an seiner oberen und unteren Seite durch ein Paar von Rippen (L) geschlossen ist, welche in dem ersten Trennelement (411) gebildet sind, und welcher an beiden Seiten durch das erste Trennelement (411) und das zweite Trennelement (412) geschlossen ist; und
wobei der obere Gasströmungsweg (421) und der untere Gasströmungsweg (422) innerhalb der Hilfswand (400) nicht miteinander in Verbindung sind.

## Revendications

1. Bloc-batterie logeant un empilement de cellules incluant une ou plusieurs cellules de batterie, comprenant :
un boîtier de bloc (1000) ayant un espace dans lequel l'empilement de cellules est placé,
dans lequel le boîtier de bloc comprend :
une plaque de base (100) supportant une portion inférieure de l'empilement de cellules ;
une paroi principale (200) s'étendant à travers la plaque de base (100) et couplée à une portion centrale de la plaque de base (100) ;
une paroi latérale (300) ayant une forme creuse et incluant un chemin d'évent de gaz (331) à l'intérieur, et couplée suivant une périphérie d'un bord de la plaque de base (100) ; et
une pluralité de parois supplémentaires (400) ayant une extrémité avant couplée à la paroi principale (200), et insérées à une extrémité arrière dans les parois latérales (300) afin de permettre à l'ouverture d'être en communication avec le chemin d'évent de gaz (331)
dans lequel la paroi supplémentaire (400) comprend :
un premier organe de cloison (411) incluant une paire de nervures (L) formées pour s'étendre suivant une direction longitudinale de la paroi supplémentaire sur un côté, et un deuxième organe de cloison (412) couplé au premier organe de cloison (411),
dans lequel au moins un parmi le premier organe de cloison (411) et le deuxième organe de cloison (412) inclut un premier trou (411h) entre la paire de nervures (L),
dans lequel le premier organe de cloison (411) est pénétré à l'extrémité arrière pour former une ouverture dans un espace entre la paire de nervures (L) dans une direction vers l'arrière du premier organe de cloison (411),
dans lequel le deuxième organe de cloison (412) comprend :
une paire de nervures (L) formées en s'étendant suivant une direction longitudinale sur un côté pour être située en haut d'une paire de nervures (L) formées sur le premier organe de cloison (411), et
la paroi supplémentaire (400) comprend un deuxième trou pénétrant entre les nervures (L) incluses dans le deuxième organe de cloison (412) sur l'autre côté, opposé au côté sur lequel est formé le premier trou
dans lequel la paroi supplémentaire (400) comprend :
un chemin d'écoulement de gaz (420) fermé sur ses surfaces supérieure et inférieure par la paire de nervures (L), et fermé des deux côtés par le premier organe de cloison (411) et le deuxième organe de cloison (412), le chemin d'écoulement de gaz (420) étant ouvert sur l'extérieur à travers le premier trou et l'ouverture, respectivement.

2. Bloc-batterie selon la revendication 1, dans lequel la paroi supplémentaire (400) est agencée pour être espacée séparément suivant la direction longitudinale de la paroi principale (200) des deux côtés de la paroi principale (200).

3. Bloc-batterie selon la revendication 1, dans lequel la paire de nervures (L) est espacée séparément vers le haut et vers le bas d'une distance prédéterminée.

4. Bloc-batterie selon la revendication 1, dans lequel le deuxième organe de cloison (412) est couplé au premier organe de cloison (411) dans une direction faisant face aux nervures (L) du premier organe de cloison (411).

5. Bloc-batterie selon la revendication 1, dans lequel la paroi supplémentaire (400) comprend une pluralité de premiers trous (411h) sur un côté.

6. Bloc-batterie selon la revendication 1, dans lequel
les premier et deuxième trous sont formés des deux côtés de la paroi supplémentaire au niveau d'une portion inférieure et supérieure, respectivement.

7. Bloc-batterie selon la revendication 1, dans lequel le premier organe de cloison (411) et le deuxième organe de cloison (412) sont pénétrés à l'extrémité arrière pour ouvrir un espace entre la paire de nervures (L) dans une direction vers l'arrière de chacun du premier organe de cloison (411) et du deuxième organe de cloison (412).

8. Bloc-batterie selon la revendication 7, dans lequel la paroi supplémentaire (400) est insérée à son extrémité arrière dans la paroi latérale pour permettre à une ouverture supérieure (431) et une ouverture inférieure (432) d'être en communication avec le chemin d'évent de gaz (331).

9. Bloc-batterie selon la revendication 1, dans lequel la paroi supplémentaire (400) comprend une pluralité des premiers trous (411h) et des deuxièmes trous (412h) sur chaque côté.

10. Bloc-batterie selon la revendication 1, dans lequel la paroi supplémentaire (400) comprend :
un chemin d'écoulement de gaz supérieur (421) situé en haut, fermé sur ses côtés supérieur et inférieur par une paire de nervures (L) formées dans le deuxième organe de cloison (412), et fermé des deux côtés par le premier organe de cloison (411) et le deuxième organe de cloison (412) ; et
un chemin d'écoulement de gaz inférieur (422) situé en bas, fermé sur ses côtés supérieur et inférieur par une paire de nervures (L) formées dans le premier organe de cloison (411), et fermé des deux côtés par le premier organe de cloison (411) et le deuxième organe de cloison (412) ; et
le chemin d'écoulement de gaz supérieur (421) et le chemin d'écoulement de gaz inférieur (422) ne communiquent pas entre eux au sein de la paroi supplémentaire (400).
